# EUROPÄISCHE PATENTSCHRIFT

(11) **EP 1 697 468 B1**
(45) Veröffentlichungstag und Bekanntmachung des Hinweises auf die Patenterteilung: **30.06.2010**
(21) Anmeldenummer: 04816257.2
(22) Anmeldetag: 15.12.2004
(51) Int. Cl.: C09C 1/64, C09C 1/62

(54) **GEFÄRBTE METALLPIGMENTE, VERFAHREN ZU DEREN HERSTELLUNG, VERWENDUNG DER GEFÄRBTEN METALLPIGMENTE IN KOSMETIKA UND KOSMETIKUM**
COLORED METAL PIGMENTS, METHOD FOR THE PRODUCTION THEREOF, USE OF THE COLORED METAL PIGMENTS IN COSMETICS, AND COSMETIC CONTAINING THESE
PIGMENTS MÉTALLIQUES COLORÉS, PROCÉDÉ DE PRODUCTION DESDITS PIGMENTS, UTILISATION DESDITS PIGMENTS EN COSMÉTIQUE ET PRODUITS COSMÉTIQUES AINSI OBTENUS

(30) Priorität: 23.12.2003 DE 10361436
(43) Veröffentlichungstag der Anmeldung: 06.09.2006
(73) Patentinhaber: Eckart GmbH, 91235 Hartenstein (DE)
(72) Erfinder: KRÜGER, Peter, 91207 Lauf (DE)
(74) Vertreter: Walcher, Armin
(86) Internationale Anmeldenummer: PCT/DE2004/002742
(87) Internationale Veröffentlichungsnummer: WO 2005/061630

(56) Entgegenhaltungen:
- EP-A- 0 708 154
- EP-A- 1 281 732
- WO-A-00/09617
- DE-A1- 2 313 332

## Beschreibung

Die vorliegende Erfindung betrifft gefärbte Metallpigmente, Verfahren zu deren Herstellung, die Verwendung der gefärbten Metallpigmente in Kosmetika und ein unter Verwendung der gefärbten Metallpigmente hergestelltes Kosmetikum.

Kosmetika dienen dem Schutz von Haut, Haaren, Finger- und Fußnägeln, Augen und Lippen vor mechanischer Beschädigung, Austrocknung und Infektionen.

Häufig soll jedoch neben dem pflegenden und schützenden Aspekt auch noch eine bestimmte optische Wirkung erzielt werden, beispielsweise durch Zusatz von farb- und effektgebenden Mitteln.

Diese farb- und effektgebenden Mittel können Farbstoffe, verlackte organische Farbstoffe, anorganische oder organische Pigmente oder Effektpigmente sein, wobei insbesondere bei Effektpigmenten der Wunsch im Vordergrund steht, je nach dem Betrachtungswinkel des aufgebrachten Präparates einen unterschiedlichen Farbeindruck oder Helligkeitseindruck zu erzielen. Hierfür werden im kosmetischen Bereich herkömmlicher Weise insbesondere Perlglanzpigmente eingesetzt.

Unter Effektpigmenten versteht man Pigmente, die eine gerichtete Reflexion an überwiegend flächig ausgebildeten, orientierten metallischen oder stark lichtbrechenden Partikeln aufweisen (DIN 55944). Sie sind stets plättchenförmig und haben verglichen mit Farbpigmenten sehr große Partikeldurchmesser. Ihre optischen Eigenschaften werden durch Reflexion und Interferenz bestimmt. Je nach Transparenz, Absorption, Dicke, Ein- und Mehrschichtenaufbau zeigen die Effektpigmente metallischen Glanz, Perlganz, Interferenz oder Interferenzreflexion. Hauptanwendungsbereiche sind Automobillacke, Kunststoffeinfärbung, Anstrich-mittel, Lederbeschichtungen, Druckfarben und Keramikeinfärbung. Perlglanzpigmente finden vielfache Anwendung in Kosmetika. Für eine umfassende Darstellung des technischen Hintergrunds vgl. W. Ostertag, Nachr. Chem. Tech. Lab. 1994, 9, 849.

Die am häufigsten verwendeten Effektpigmente sind Aluminiumflakes und beschichtete Glimmerplättchen, wobei Aluminiumpigmente typischen Metallglanz, beschichtete Glimmerplättchen typischen Perlglanz zeigen.

In den vergangenen Jahren hat der Bedarf an farbigen Effektpigmenten stark zugenommen. Daher wurden beispiels-weise oxidbelegte Kupfer- und Messingplättchen, mit Übergangsmetalloxiden beschichtete Substrate wie Muskovit, Phlogopit oder Glas, Guanin-Einkristalle (Fischsilber), BiOCI-Einkristalle, plättchenförmige Hämatit-Einkristalle, plätt-chenförmige Phthalocyanine oder zerkleinerte dünne Mehrschichterfilme mit Fabry-Perrot-Struktur als Effektpigmente eingesetzt.

Um Farbeffekte zu erzielen, werden beispielsweise auch Aluminiumpigmente mit transparenten Farbpigmenten gemischt. Die koloristischen Möglichkeiten sind bei dieser Methode allerdings insofern begrenzt, als auf diese Weise keine Interferenzeffekte erzielt werden können, die Pigmente also keinen Perlglanz aufweisen. Farbige Interferenzpigmente mit Perlglanz, die meist auf beschichteten Glimmerplättchen basieren, weisen wiederum aufgrund ihrer Transparenz eine schlechtere Deckfähigkeit auf als Aluminiumpigmente. Es hat daher nicht an Versuchen gefehlt, durch Einfärben von Aluminiumpigmenten Pigmente mit der guten Deckfähigkeit der Aluminiumflakes und den koloristischen Möglichkeiten der Interferenzpigmente herzustellen.

US-4,328,042 und EP-A-0033457 beschreiben die Herstellung goldfarbener Pigmente durch Abscheidung von Eisenoxid auf Aluminium, wobei Eisenpentacarbonyl in einer durch Fluidisierung mit Inertgas erzeugten Wirbelschicht der Aluminiumflakes mit Sauerstoff oxidiert wird. Der Nachteil dieses Verfahrens ist der sehr große technologische Aufwand.

US-5,037,475 beschreibt die Herstellung von Aluminiumpigmenten, die durch Fixierung von Farbpigmenten auf der Metalloberfläche eingefärbt sind. Die Fixierung der Farbpigmente erfolgt über carboxylgruppenhaltige Polymere. Zur Haftungsverbesserung kann durch Polymerisation eine Schutzschicht aufgebracht werden. Die so erzeugten Pigmente weisen jedoch nur eine geringe Farbintensität auf.

WO 91/04293 (PCT/US90/05236) beschreibt die Einfärbung von Aluminiumpigmenten durch Fixierung von polymerbeschichteten Farbpigmenten aus wässerigen Lösungsmitteln über elektrostatische Kräfte auf den Metalloberflächen. Das Beschichtungsergebnis hängt dabei in komplexer Weise von der Aluminiumpigmenttype, der Art der Polymerbeschichtung der Farbpigmente, der Lösungsmittelzusammensetzung und dem pH-Wert ab.

EP-A-0 328 906 offenbart Titandioxid-beschichtete Metallpigmente, u.a. auch Aluminiumpigmente, deren Herstellung durch Hydrolyse einer organischen Titanatester-Verbindung, z. B. Tetraisopropoxytitan, in Gegenwart der in einem organischen Medium suspendierten Metallplättchen bei pH 4 bis 8 erfolgt.

Verschiedene Farbtöne lassen sich mit diesem Verfahren durch Variation der Dicke der Titandioxidschicht erzielen. Für die Herstellung der beschichteten Pigmente ist die Einhaltung spezifischer Bedingungen entscheidend. Der pH muß im Bereich von 4 bis 8 liegen, und die Zutropfgeschwindigkeit bei der Zugabe des Titanatesters muss im Bereich von 1,0 x 10⁻⁷ bis 1,0 x 10⁻⁴ Mol pro Minute und m² Metalloberfläche liegen. Daher ist dieses Verfahren großtechnisch kaum einsetzbar. Zudem müssen die beschichteten Pigmente nach dem Trocknen kalziniert werden, um Farbeffekte zu erzielen, da erst durch die Entfernung des Wassers aus der Metalloxidschicht eine geeignete Schichtstruktur entsteht. Wegen des niedrigen Schmelzpunkts von Aluminium ist das Kalzinieren beschichteter Aluminiumpigmente jedoch nur sehr schlecht möglich.

US-4,978,394 beschreibt die Herstellung mit Titandioxid beschichteter Aluminiumpigmente durch chemische Gasphasen-beschichtung (chemical vapor deposition, CVD), wobei Titantetrachlorid in geringer Konzentration mit Wasserdampf in einem fluidisierten Wirbelbett in Gegenwart heißer Aluminiumpartikel umgesetzt wird. Auch bei diesem Verfahren wirkt sich die aufwendige Technologie nachteilig aus.

In US-4,158,074 wird die Herstellung farbiger Aluminiumpigmente durch Beschichten mit einem Film aus hydratisiertem Aluminiumoxid und hydratisiertem Metalloxid offenbart. Der Film wird durch Behandeln feiner Aluminiumplättchen in alkalischer Lösung eines Eisen- Nickel-, Kobalt-, Zink- oder Kupfersalzes bei erhöhter Temperatur bei pH 8 bis 12 erzeugt, d. h. durch eine elektrochemische Reaktion der Metallsalze. So lassen sich goldfarbige Pigmente, durch Zusatz von Chelatbildnern auch schwarzbraune und grauweiße Pigmente herstellen. Es steht somit nur eine eng begrenzte Farbpalette zur Verfügung.

DE-PS 25 57 796 offenbart farbige Metallpigmente, die mit einer Ruß als Farbpigment enthaltenden Metalloxidschicht beschichtet sind. Die offenbarten Pigmente sind entweder tiefschwarze Pigmente oder farbige Pigmente mit besonderen Farbeffekten.

DE-OS 36 17 430 beschreibt Perlglanzpigmente die aus plättchenförmigen farbigen Pigmenten mit einer eisenoxid-haltigen Schicht bestehen. Als plättchenförmiges Substrat sind Glasplättchen, Metallplättchen und Graphit offenbart. Die eisen(II)-oxidhaltige Schicht kann als reine Eisen(II)-oxid-Schicht vorliegen oder als Schicht eines Mischoxids wie z.B. Eisenaluminat, Chromeisenstein, Eisenorthosilicat und auch Ilmenit.

DE-OS 42 23 383 betrifft Glanzpigmente mit metallsulfidhaltiger Beschichtung auf Basis von beschichteten plättchenförmigen silikatischen oder metallischen Substraten. Als metallische Substrate sind alle für Metalleffektpigmente bekannten Metalle in Plättchenform offenbart, insbesondere Kupfer und seine Legierungen, wie Messing oder Bronzen, und vor allem Aluminium und seine Legierungen wie Aluminiumbronzen. Zur Herstellung von bunten, Interferenzfarben zeigenden Pigmenten können die Substratteilchen bereits mit einer Schicht aus hochbrechenden Metalloxid belegt sein, auf der die metallsulfidhaltige Schicht bevorzugt über die Gasphase auf das Substrat aufgebracht wird.

DE-OS 42 23 384 offenbart Glanzpigmente auf Basis metalloxidbeschichteter Aluminiumplättchen mit einem Gesamtkohlenstoffgehalt von <0,1 Gew.-%. Als bevorzugte Oxide der Metalloxidschicht sind Titan-, Zirkon-, Zinn- und Chromoxid erwähnt und ebenso Eisenoxid.

JP-1-110568 offenbart ein gefärbtes Aluminiumpulverpigment, das durch Hydrolisieren eines metallischen Alkoholats (z. B. Tetraethyltitanat), Beschichten der Oberfläche eines Aluminiumpulvers mit dem resultierenden Produkt und weiteres Erwärmen des erhaltenen Pulvers auf eine Temperatur von > 200°C und unterhalb des Zündpunktes des Alumi-niumpulvers erhalten wird.

In US-5,261,955 wird ein Sol-Gel-Prozess zur Herstellung farbiger Metallpigmente beschrieben, wobei die Metallplättchen in einem Sol eines anorganischen Salzes dispergiert werden, z. B. einem wässerigen alkalischen Zirkonium-oxid-Sol, die mit dem Sol beschichteten Plättchen nach Filtration in einer Lösung einer anorganischen Verbindung, z. B. Kobaltnitrat, in einem organischen Lösungsmittel dispergiert werden, und durch Erhitzen eine Sol-Gel-Schicht auf den Plättchen gebildet wird. Durch die Vielzahl von einzelnen Schritten ist auch bei diesem Verfahren ein hoher apparativer Aufwand erforderlich.

JP-A-61-1 30375 offenbart ein goldfarbenes Aluminiumpigment, hergestellt durch Behandeln von Aluminiumpulver mit Dichromat, Natriumfluorid und oberflächenaktiven Mitteln in saurer Lösung, Trocknen und anschließendes Behandeln mit einem Fettsäurederivat. Andere Farbtöne als Gold lassen sich mit dieser Methode nicht erzielen.

DE-OS 41 40 295 beschreibt Pigmente aus plättchenförmigen Trägermaterialien, bevorzugt Glimmer, die von einer anorganischen Matrix überzogen sind, in der Metalloxide und/oder Farbstoffpartikel im Submikrometerbereich enthalten sind. Die Beschichtung der Substrate erfolgt aus sauren wässerigen Suspensionen durch Hydrolyse von Metallsalzen, bevorzugt Titantetrachlorid, in Gegenwart von Metalloxid- und/oder Farbstoffpartikeln. Die Einfärbung von Aluminiumplättchen nach diesem Verfahren ist jedoch nicht möglich, weil sich die Aluminiumpartikel unter diesen Bedingungen rasch zersetzen.

US-3,067,052 offenbart farbige Aluminiumpigmente, die durch Oxidation von Aluminiumpulver mit KMnO4-Lösung gegebenenfalls unter Zusatz eines Reduktionsmittels hergestellt werden. Der Farbton dieser Pigmente ist golden, gegebenenfalls je nach verwendetem Reduktionsmittel auch mit grünlichem oder rötlichem Ton.

Mit den Verfahren zur Herstellung farbiger Pigmente auf Glimmer-Basis lassen sich aus den genannten Gründen keine farbigen Aluminiumpigmente herstellen, an denen jedoch wegen der höheren Deckkraft und des Metallglanzes ein großes Interesse besteht. Die bekannten Verfahren zur Einfärbung von Aluminiumpigmenten liefern jedoch nur wenige Farbtöne, überwiegend im Goldbereich, und sind größtenteils apparativ sehr aufwendig. Es bestand daher nach wie vor ein Bedarf an in verschiedenen Farbtönen gefärbten Aluminiumpigmenten und an einem apparativ einfachen Verfahren zur Herstellung dieser farbigen Aluminiumpigmente.

Die WO 00/09617 betrifft Mehrschichtpigmente auf Basis von plättchenfömigen Metallpigmenten. Die EP 0708154 A2 betrifft mehrfach beschichtete metallische Glanzpigmente.

Die aus dem Stand der Technik bekannten Pigmente sind in der Regel aufgrund bestehender Gesetze in Kosmetikprodukten nicht einsetzbar.

Die Aufgabe der vorliegenden Erfindung besteht darin, derartige eingefärbte Metallpigmente mit vorzugsweise guter Deckkraft bereitzustellen, die vorzugsweise zur Verwendung in Kosmetika geeignet sind.

Die der Erfindung zugrundeliegende Aufgabe wird erfindungsgemäß durch die Bereitstellung eines farbigen plättchenförmiges Metallpigmentes gelöst, wobei ein Basispigment aus Metall, eine Schicht aus Siliziumdioxid und nachfolgend eine Schicht oder mehrere Schichten mit einem oder mehreren farbgebenden Material/ien umfasst, wobei in wenigstens einer Schicht farbgebendes Material Berliner Blau oder Carminrot ist.

Bevorzugte Weiterbildungen sind in den Unteransprüchen 2 bis 8 angegeben.

Die erfindungsgemäßen Pigmente können auch gut in Verbindung mit anderen plättchenförmigen Effektpigmenten, wie z. B. Perlglanzpigmenten, Metallpigmenten oder mit organischen und anorganischen Absorptionsfarbpigmenten kombiniert werden.

Die Aufgabe wird ferner gelöst durch Bereitstellung eines Verfahrens zur Herstellung eines farbigen Metallpigments gemäß einem der Ansprüche 1 bis 8 mit folgenden Schritten:
a. Beschichten eines Basispigments mit SiO2,
b. Dispergieren des in Schritt (a) beschichteten Metallpigments in einer Flüssigphase, vorzugsweise Wasser,
c. Zugeben einer oder mehrerer Lösung/en einer oder mehrerer Metallsalze zur Erzeugung farbgebender Materialien,
d. Abtrennen des in Schritt (c) erhaltenen farbigen Metallpigments, und
e. wahlweise Trocknen des in Schritt (d) erhaltenen farbigen Metallpigments..

Bevorzugte Weiterbildungen sind in den Unteransprüchen 10 bis 13 angegeben.

Als Flüssigphase wird vorzugsweise Wasser verwendet. Selbstverständlich können auch organische Lösungsmittel oder mit wässrige organische Lösungsmittel verwendet werden.

Vorzugsweise wird im Schritt (c) der pH-Wert im Bereich von 1,7 bis 9,5 eingestellt wird. Der pH-Wert wird während der Färbung vorzugsweise konstant gehalten, was durch Zudosieren einer geeigneten Säure oder Base bewirkt werden kann.

Die der Erfindung zugrundeliegende Aufgabe wird ferner durch die Verwendung der erfindungsgemäßen gefärbten Metallpigmente in Kosmetika als auch durch ein Kosmetikum, das die erfindungsgemäßen gefärbten Metallpigmente enthält, gelöst.

Gegenstand der Erfindung sind mithin kosmetische Zubereitungen, die die erfindungsgemäßen gefärbten Metallpigmente enthalten. Geeignete Zusammensetzungen für die kosmetische Zubereitungen, in die die erfindungsgemäßen gefärbten Metallpigmente eingebracht werden können, sind dem Fachmann bekannt.

Die Formulierung von Kosmetika mit den erfindungsgemäßen Metallpigmenten geschieht mit dem Fachmann geläufigen Verfahren und Maßnahmen.

Die erfindungsgemäßen Pigmente eignen sich besonders für die Anwendung in Lippenstiften, Augenpflegemitteln, wie Lidschatten, Wimperntusche, Mascara, Eyeliner, Cremes, Puder, Parfüms, Nagellacken, Körpersprays, Make-up Formulierungen, Haarpflegemittel, Seife oder Sonnenschutzmittel.

Die erfindungsgemäßen Pigmente werden vorzugsweise in Mengen von 1 bis 50 Gew.-%, bevorzugt 2-30 Gew.-% und weiter bevorzugt von 2,5 - 15 Gew.-%, jeweils bezogen auf das Gesamtgewicht der kosmetischen Formulierung, in Kosmetika verwendet.

Die erfindungsgemäßen Pigmente umfassen ein plättchenförmiges metallisches Basispigment mit einer Beschichtung aus Siliziumdioxid sowie einer oder mehrere nachfolgende Beschichtungen, die ein oder mehrere farbgebende(s) Material/ein aufweisen.

Das metallische Basispigment besteht beispielsweise aus Aluminium, Kupfer, Zink, Eisen, Goldbronze, Silber oder Legierungen hieraus.

Das Basispigment ist gegebenenfalls beschichtet, beispielsweise mit einer Schicht aus Aluminiumoxid (Produktreihe ALOXAL der Eckart GmbH & Co. KG).

Das farbgebende Material kann ein anorganisches Metalloxid wie FeOOH, Fe₂O₃ oder Cr₂O₃ sein, es kann auch Berliner Blau oder Carminrot sein.

Das farbgebende Material kann alleine, in Mischungen oder aufeinander folgenden Schichten vorliegen.

Vorzugsweise befindet sich auf dem Ausgangspigment eine passivierende Schicht aus Siliziumdioxid und nachfolgend eine oder mehrere Schichten aus farbgebendem Material.

Die Herstellung der erfindungsgemäßen Pigmente erfolgt durch Beschichten plättchenförmiger Metallpigmente mit Siliziumdioxid, vorzugsweise durch Hydrolyse organischer oder anorganischer Siliziumverbindungen in einem Sol-Gel-Prozess. Die Beschichtung kann aber auch mit Wasserglas erfolgen.

Derartige Verfahren sind beispielsweise in der EP 1 084 198 und der US 2,885,366 beschrieben, die hiermit unter Bezugnahme aufgenommen sind.

Mit Siliziumdioxid beschichtete Metallpigmente sind kommerziell verfügbar. Speziell für den Kosmetikbereich werden sie unter der Bezeichnung Visionaire Metallic Pigments (Eckart GmbH & Co. KG) angeboten.

Die Beschichtung der mit Siliziumdioxid beschichteten Metallpigmente mit farbigen Metalloxiden, Berliner Blau, Carminrot sowie Mischungen dieser Stoffe erfolgt nach an sich bekannten Verfahren.

Ein tiefblaues Pigment kann durch Auffällen von Eisen(III)-hexacyanoferrat(II) erhalten werden. Dazu werden eine wäßrige Eisen(III)chloridlösung und eine wäßrige Kaliumhexacyanoferrat(II)lösung bei pH 1,8 bis 4 gleichzeitig zu einer auf 60 bis 90°C erhitzten Dispersion des mit Siliziumdioxid beschichteten Metallpigmentes dosiert. Das Pigment kann auf übliche Weise aufgearbeitet und bei 80 bis 130°C getrocknet werden. Es kann ebenfalls nach gängigen Methoden zunächst farbloses Eisen(II)-Hexacyanoferrat(II) abgeschieden und anschließend zu Berliner Blau oxidiert werden.

Bei Beschichtung mit gelbem Eisenoxid in der Goethitmodifikation kann von einer Eisen(III)-Salzlösung ausgegangen werden, die bei einem pH-Wert von 2,5-4,5 zu einer auf 60-90° erhitzten Suspension des Metallpigments zudosiert wird, wobei der pH-Wert durch gleichzeitige Zugabe von Natronlauge konstant gehalten wird.

Ein grünes Pigment kann erhalten werden, wenn das mit Siliziumdioxid beschichtete Metallpigment mit Chromoxid beschichtet wird. Die Beschichtung erfolgt durch Zudosierung einer Chromchloridlösung zu einer auf 60 bis 90°C erhitzten Suspension der Metallpigmente bei einem pH-Wert von 5,5-9, wobei nach der üblichen Aufarbeitung das Pigment bei 500 - 660°C getempert werden kann.

Ein rotes Pigment kann durch die Zudosierung einer auf pH 11 eingestellten Carmin-Lösung zu einem mit Aluminiumhydroxid belegten mit Siliziumdioxid beschichteten Metallpigment bei einem pH-Wert von 5,5 erfolgen.

Im folgenden sind Beispiele für eingefärbte, stabilisierte Metallpigmente und deren Verwendung in Kosmetika aufgeführt. Diese Beispiele sollen die Erfindung weiter verdeutlichen, ohne sie jedoch einzuschränken.

### Beispiel 1: Beschichtung von Aluminiumplättchen mit Berliner Blau

200 g mit SiO₂ beschichtetes Aluminiumpigment (Visionaire Bright Silver Sea der Firma ECKART GmbH & Co. KG) werden in 1000 g vollentsalztem Wasser unter Rühren dispergiert, auf 75°C erhitzt und mit 10 %iger Salzsäure der pH-Wert 4 eingestellt. Dann werden eine Lösung aus 42.75 g Eisen(III)chlorid in 240 g Wasser und eine Lösung von 50.4 g Kaliumhexacyanoferrat(II) in 240 g Wasser gleichzeitig aber getrennt voneinander zugegeben und der pH-Wert durch gleichzeitige Zugabe von 5 %iger Salzsäure bzw. NaOH konstant gehalten. Die Dosiergeschwindigkeiten betragen 2 ml/min. Nach Zugabe der beiden Lösungen wird noch 30 min gerührt. Der Feststoff wird über eine Nutsche abgetrennt, mit vollentsalztem Wasser salzfrei gewaschen und bei 60°C im Vakuum getrocknet.
Man erhält ein blaues, glänzendes Pulver.

### Beispiel 2: Beschichtung von Goldbronzepigmenten mit Berliner Blau

200 g mit SiO₂ beschichtetes Goldbronzepigment (Visionaire Bright Natural Gold der Firma ECKART GmbH & Co. KG) werden in 1000 g vollentsalztem Wasser unter Rühren dispergiert, auf 75°C erhitzt und mit 10 %iger Salzsäure der pH-Wert 4 eingestellt. Dann werden eine Lösung aus 42.75 g Eisen(III)chlorid in 240 g Wasser und eine Lösung von 50.4 g Kaliumhexacyanoferrat(II) in 240 g Wasser gleichzeitig aber getrennt voneinander zugegeben und der pH-Wert durch gleichzeitige Zugabe von 5 %iger Salzsäure bzw. NaOH konstant gehalten. Die Dosiergeschwindigkeiten betragen 2 ml/min. Nach Zugabe der beiden Lösungen wird noch 30 min gerührt. Der Feststoff wird über eine Nutsche abgetrennt, mit vollentsalztem Wasser salzfrei gewaschen und bei 60°C im Vakuum getrocknet.
Man erhält ein grünes, glänzendes Pulver.

### Beispiel 3: Beschichtung von Aluminiumpigmenten mit Carmin

200 g mit SiO₂ beschichtetes Aluminiumpigment (Visionaire Bright Silver Sea der Firma ECKART GmbH & Co. KG) werden in 1000 g vollentsalztem Wasser unter Rühren dispergiert, auf 75°C erhitzt und mit 10 %iger Salzsäure der pH-Wert 6 eingestellt. Dann wird eine Lösung aus 9.32 g Aluminium(III)chlorid in 120 g Wasser zugegeben. Die Dosiergeschwindigkeit beträgt 8 ml/min. Der pH-Wert wird durch Zugabe von 5 %iger Natronlauge konstant gehalten. Anschließend werden 13.6 g Carminlack in 800 ml vollentsalztem Wasser eingeleitet. Die Dosiergeschwindigkeit beträgt 8 ml/min. Nach Zugabe der beiden Lösungen wird noch 30 min gerührt. Der Feststoff wird über eine Nutsche abgetrennt, mit vollentsalztem Wasser salzfrei gewaschen und bei 80°C im Vakuum getrocknet. Man erhält ein rotes, glänzendes Pulver.

### Beispiel 4: Beschichtung von Goldbronzepigmenten mit Carmin

200 g mit SiO₂ beschichtetes Goldbronzepigment (Visionaire Bright Natural Gold der Firma ECKART GmbH & Co. KG) werden in 1000 g vollentsalztem Wasser unter Rühren dispergiert, auf 75°C erhitzt und mit 10 %iger Salzsäure der pH-Wert 6 eingestellt. Dann wird eine Lösung aus 9.32 g Aluminium(III)chlorid in 120 g Wasser zugegeben. Die Dosiergeschwindigkeit beträgt 8 ml/min. Der pH-Wert wird durch Zugabe von 5 %iger Natronlauge konstant gehalten. Anschließend werden 13.6 g Carminlack in 800 ml vollentsalztem Wasser eingeleitet. Die Dosiergeschwindigkeit beträgt 8 ml/min. Nach Zugabe der beiden Lösungen wird noch 30 min gerührt. Der Feststoff wird über eine Nutsche abgetrennt, mit vollentsalztem Wasser salzfrei gewaschen und bei 80°C im Vakuum getrocknet.
Man erhält ein rotes, glänzendes Pulver.

### Nicht erfindungsgemäßes Beispiel 5: Beschichtung von Aluminiumpigmenten mit FeOOH

200 g mit SiO₂ beschichtete Aluminiumpigment (Visionaire Bright Silver Sea der Firma ECKART GmbH & Co. KG) werden in 1000 g vollentsalztem Wasser unter Rühren dispergiert, auf 75°C erhitzt und mit 2.5 %iger Salzsäure der pH-Wert 4.1 eingestellt. Dann werden 101.6 g einer wässrigen 40 %igen Eisen(III)chlorid-Lösung zugegeben. Die Dosiergeschwindigkeit beträgt 2 ml/min. Der pH-Wert wird durch Zugabe von 5 %iger Natronlauge konstant gehalten. Nach Zugabe der beiden Lösungen wird noch 30 min gerührt. Der Feststoff wird über eine Nutsche abgetrennt, mit vollentsalztem Wasser salzfrei gewaschen und bei 110°C getrocknet.
Man erhält ein goldgelbes, glänzendes Pulver.

### Beispiel 6: Beschichtung von Aluminiumpigmenten mit FeOOH und Berliner Blau

200 g des Pigmentes aus Beispiel 5 werden in 1000 g vollentsalztem Wasser unter Rühren dispergiert, auf 75°C erhitzt und mit 2.5 %iger Salzsäure der pH-Wert 4.1 eingestellt. Dann werden eine Lösung aus 28.5 g Eisen(III)chlorid in 160 g Wasser und eine Lösung von 33.6 g Kaliumhexacyanoferrat(II) in 160 g Wasser gleichzeitig aber getrennt zugegeben und der pH-Wert durch gleichzeitige Zugabe von 5 %iger Salzsäure bzw. NaOH konstant gehalten. Die Dosiergeschwindigkeiten betragen 2 ml/min. Nach Zugabe der beiden Lösungen wird noch 30 min gerührt. Der Feststoff wird über eine Nutsche abgetrennt, mit vollentsalztem Wasser salzfrei gewaschen und bei 60°C im Vakuum getrocknet.
Man erhält ein grünes, glänzendes Pulver.

### Beispiel 7: Beschichtung von Aluminiumpigmenten mit FeOOH und Berliner Blau

200 g mit SiO₂ beschichtetes Aluminiumpigment werden in 1000 g vollentsalztem Wasser unter Rühren dispergiert, auf 75°C erhitzt und mit 2.5 %iger Salzsäure der pH-Wert 4.1 eingestellt. Dann wird eine Lösung aus 101.6 g einer wässrigen 40 %igen Eisen(III)chlorid-Lsg. zugegeben. Die Dosiergeschwindigkeit beträgt 2 ml/min. Der pH-Wert wird durch Zugabe von 5 %iger Natronlauge konstant gehalten. Nach Zugabe der Lösung wird noch 30 min gerührt. Dann werden eine Lösung aus 28.5 g Eisen(III)chlorid in 160 g Wasser und eine Lösung von 33.6 g Kaliumhexacyanoferrat(II) in 160 g Wasser gleichzeitig aber getrennt zugegeben und der pH-Wert durch gleichzeitige Zugabe von 5 %iger Natronlauge konstant gehalten. Die Dosiergeschwindigkeiten betragen 2 ml/min. Nach Zugabe der beiden Lösungen wird noch 30 min gerührt. Der Feststoff wird über eine Nutsche abgetrennt, mit vollentsalztem Wasser salzfrei gewaschen und bei 60°C im Vakuum getrocknet.
Man erhält ein türkis-grünes glänzendes Pulver.

### Beispiel 8: Beschichtung von Aluminiumpigmenten mit Carmin und Berliner Blau

50 g des Pigmentes aus Beispiel 3 werden in 617 g vollentsalztem Wasser unter Rühren dispergiert, auf 75°C erhitzt und mit 2.5 %iger Salzsäure wird der pH-Wert 4 eingestellt. Dann werden eine Lösung aus 3.56 g Eisen(III)chlorid in 20 g Wasser und eine Lösung von 4.2 g Kaliumhexacyanoferrat(II) in 20 g Wasser gleichzeitig aber getrennt zugegeben und der pH-Wert durch gleichzeitige Zugabe von 5 %iger Natronlauge konstant gehalten. Die Dosiergeschwindigkeiten betragen 0.5 ml/min. Nach Zugabe der beiden Lösungen wird noch 30 min gerührt. Der Feststoff wird über eine Nutsche abgetrennt, mit vollentsalztem Wasser salzfrei gewaschen und bei 60°C im Vakuum getrocknet. Man erhält ein violettes, glänzendes Pulver.

Die in den vorstehenden Beispielen hergestellten farbigen Metallpigmente können dann in beliebige Kosmetika eingearbeitet werden, wobei man Kosmetika mit entsprechender Farbgebung oder Farbtönung erhält.

## Patentansprüche

1. Farbiges plättchenförmiges Metallpigment,
**dadurch gekennzeichnet,**
**dass** es ein Basispigment aus Metall, eine Schicht aus Siliziumdioxid und nachfolgend eine Schicht oder mehrere Schichten mit einem oder mehreren farbgebenden Material/ien umfaßt, wobei in wenigstens einer Schicht farbgebendes Material Berliner Blau oder Carminrot ist.

2. Farbiges Metallpigment nach Anspruch 1,
**dadurch gekennzeichnet,**
**dass** das Basispigment aus Aluminium, Kupfer, Zink, Eisen, Goldbronze, Silber oder Legierungen hieraus besteht.

3. Farbiges Metallpigment nach Anspruch 1 oder 2,
**dadurch gekennzeichnet,**
**dass** das Basispigment vorbeschichtet ist.

4. Farbiges Metallpigment nach einem der Ansprüche 1 bis 3,
**dadurch gekennzeichnet,**
**dass** das Basispigment mit einer Schicht aus Aluminiumoxid vorbeschichtet ist.

5. Farbiges Metallpigment nach einem der Ansprüche 1 bis 4,
**dadurch gekennzeichnet,**
**dass** das farbgebende Material Metalloxide wie FeOOH, Fe₂O₃ oder Cr₂O₃ oder Mischungen hieraus umfaßt.

6. Farbiges Metallpigment nach einem der Ansprüche 1 bis 5,
**dadurch gekennzeichnet,**
**dass** das farbgebende Material oder die farbgebenden Materialien Mischungen oder aufeinanderfolgende Schichten aus FeOOH, Fe₂O₃, Berliner Blau und/oder Carminrot umfasst bzw. umfassen.

7. Farbiges Metallpigment nach Anspruch 6,
**dadurch gekennzeichnet,**
**dass** die aufeinanderfolgenden Schichten FeOOH und Berliner Blau sind.

8. Farbiges Metallpigment nach Anspruch 6,
**dadurch gekennzeichnet,**
**dass** die aufeinanderfolgenden Schichten Carminrot und Berliner Blau sind.

9. Verfahren zur Herstellung eines farbigen Metallpigments gemäß einem der Ansprüch 1 bis 8 mit folgenden Schritten:
a. Beschichten eines Basispigments mit SiO₂,
b. Dispergieren des in Schritt (a) beschichteten Metallpigments in einer Flüssigphase, vorzugsweise Wasser,
c. Zugeben einer oder mehrerer Lösung/en einer oder mehrerer Metallsalze zur Erzeugung farbgebender Materialien,
d. Abtrennen des in Schritt (c) erhaltenen farbigen Metallpigments, und
e. wahlweise Trocknen des in Schritt (d) erhaltenen farbigen Metallpigments.

10. Verfahren nach Anspruch 9,
**dadurch gekennzeichnet,**
**dass** im Schritt (c ) der pH-Wert im Bereich von 1,7 bis 9,5 eingestellt wird.

11. Verfahren nach einem der Ansprüche 9 oder 10,
**dadurch gekennzeichnet,**
**dass** der pH-Wert durch Zudosieren einer geeigneten Säure oder Base konstant gehalten wird.

12. Verfahren nach einem der Ansprüche 9 bis 11,
**dadurch gekennzeichnet,**
**daß** im Schritt (a) das Beschichten mit einem Sol-Gel-Verfahren erfolgt.

13. Verfahren nach einem der Ansprüche 9 bis 12,
**dadurch gekennzeichnet,**
**daß** im Schritt (a) Wasserglas verwendet wird.

14. Verwendung eines farbigen Metallpigmentes nach einem der Ansprüche 1 bis 8 in Kosmetika, vorzugsweise Lidschatten, Wimperntusche, Mascara, Lippenstifte, Make-up Formulierungen, Cremes, Puder, Eyeliner, Nagellack, Haarpflegemittel, Seife, Sonnenschutzmittel oder Parfüm.

15. Kosmetikum,
**dadurch gekennzeichnet,**
**dass** es ein farbiges Metallpigment nach einem der Ansprüche 1 bis 8 enthält.

## Claims

1. Coloured platelet-shaped metal pigment,
**characterised in that**
it comprises a base pigment of metal, a layer of silicium dioxide and then one layer or several layers with one or more colour-imparting material(s), and Berlin Blue or Carmine Red is used as a colour-imparting material in at least one layer.

2. Coloured metal pigment as claimed in claim 1,
**characterised in that**
the base pigment is made from aluminium, copper, zinc, iron, gold bronze, silver or alloys thereof.

3. Coloured metal pigment as claimed in claim 1 or 2,
**characterised in that**
the base pigment is pre-coated.

4. Coloured metal pigment as claimed in one of claims 1 to 3,
**characterised in that**
the base pigment is pre-coated with a layer of aluminium oxide.

5. Coloured metal pigment as claimed in one of claims 1 to 4,
**characterised in that**
the colour-imparting material contains metal oxides such as FeOOH, Fe₂O₃ or Cr₂O₃ or mixtures thereof.

6. Coloured metal pigment as claimed in one of claims 1 to 5,
**characterised in that**
the colour imparting material or the colour-imparting materials contains or
contain mixtures or consecutive coatings of FeOOH, Fe₂O₃, Berlin Blue and/or Carmine Red.

7. Coloured metal pigment as claimed in claim 6,
**characterised in that**
the consecutive coatings are FeOOH and Berlin Blue.

8. Coloured metal pigment as claimed in claim 6,
**characterised in that**
the consecutive coatings are Carmine Red and Berlin Blue.

9. Method of producing a coloured metal pigment as claimed in one of claims 1 to 8, comprising the following steps:
a. coating a base pigment with SiO₂,
b. dispersing the coating metal pigment obtained in step (a) in a liquid phase, preferably water,
c. adding one or more solution(s) of one or more metal salts in order to produce colour-imparting materials,
d. separating the coloured metal pigments obtained in step (c) and
e. selectively drying the coloured metal pigment obtained in step (d).

10. Method as claimed in claim 9,
**characterised in that**
the pH value is adjusted to within the range of between 1.7 and 9.5 in step (c).

11. Method as claimed in one of claims 9 or 10,
**characterised in that**
the pH value is kept constant by adding measured quantities of an appropriate acid or base.

12. Method as claimed in one of claims 9 to 11,
**characterised in that**
the coating is applied by means of a sol-gel process in step (a).

13. Method as claimed in one of claims 9 to 12,
**characterised in that**
water glass is used in step (a).

14. Use of a coloured metal pigment as claimed in one of claims 1 to 8 in cosmetics, preferably eye shadow, eyelash black, mascara, lipstick, make-up formulations, creams, powders, eye liner, nail varnish, hair care products, soap, sun protection products or perfume.

15. Cosmetic
**characterised in that**
it contains a coloured metal pigment as claimed in one of claims 1 to 8.

## Revendications

1. Pigment métallique coloré en forme de plaquette,
**caractérisé en ce que**
il comprend un pigment de base en métal, une couche d'oxyde de silicium et ensuite une couche ou plusieurs couches avec un ou plusieurs matériau(x) conférant des couleurs, sachant que dans une couche au moins, le matériau conférant la couleur est du bleu de Prusse ou du carmin.

2. Pigment métallique coloré en forme de plaquette selon la revendication 1,
**caractérisé en ce que**
le pigment de base consiste en aluminium, en cuivre, en zinc, en fer, en bronze doré, en argent ou en alliages de ceux-ci.

3. Pigment métallique coloré en forme de plaquette selon la revendication 1 ou 2,
**caractérisé en ce que**
le pigment de base est pré-revêtu.

4. Pigment métallique coloré en forme de plaquette selon l'une quelconque des revendications 1 à 3,
**caractérisé en ce que**
le pigment de base est pré-revêtu d'une couche en oxyde d'aluminium.

5. Pigment métallique coloré en forme de plaquette selon l'une quelconque des revendications 1 à 4,
**caractérisé en ce que**
le matériau conférant la couleur comprend des oxydes métalliques tels du FeOOH, du Fe₂O₃ ou du Cr₂O₃, ou des mélanges de ceux-ci.

6. Pigment métallique coloré en forme de plaquette selon l'une quelconque des revendications 1 à 5,
**caractérisé en ce que**
le matériau conférant la couleur ou les matériaux conférant la couleur comprend, respectivement comprennent des mélanges ou des couches successives en FeOOH, en Fe₂O₃, en bleu de Prusse et/ou en en carmin.

7. Pigment métallique coloré en forme de plaquette selon la revendication 6,
**caractérisé en ce que**
les couches successives sont le FeOOH et le bleu de Prusse.

8. Pigment métallique coloré en forme de plaquette selon la revendication 6,
**caractérisé en ce que**
les couches successives sont le carmin et le bleu de Prusse.

9. Procédé de préparation d'un pigment métallique coloré selon l'une quelconque des revendications 1 à 8, avec les étapes suivantes :
a. revêtement d'un pigment de base avec du SiO₂,
b. dispersion du pigment métallique revêtu à l'étape (a) dans une phase liquide, de préférence de l'eau,
c. addition d'une ou de plusieurs solution(s) d'un ou de plusieurs sels métalliques pour produire les matériaux conférant la couleur,
d. séparation du pigment métallique coloré obtenu à l'étape (c) et
e. au choix, séchage du pigment métallique coloré obtenu à l'étape (d).

10. Procédé selon la revendication 9,
**caractérisé en ce que**
dans l'étape (c), le pH est ajusté dans l'intervalle de 1,7 à 9,5.

11. Procédé selon l'une quelconque des revendications 9 ou 10,
**caractérisé en ce que**
le pH est maintenu constant par addition dosée d'un acide ou d'une base appropriés.

12. Procédé selon l'une quelconque des revendications 9 à 11,
**caractérisé en ce que**
dans l'étape (a), le revêtement s'effectue avec un procédé sol-gel.

13. Procédé selon l'une quelconque des revendications 9 à 12,
**caractérisé en ce que**
du verre soluble est utilisé dans l'étape (a).

14. Utilisation d'un pigment métallique coloré selon l'une quelconque des revendications 1 à 8 dans des cosmétiques, de préférence du fard à paupières, du mascara, du rouge à lèvres, des formulations de fond de teint, des crèmes, des poudres, des ligneurs, du vernis à ongles, des produits de soins des cheveux, du savon, des produits antisolaires ou du parfum.

15. Produit cosmétique,
**caractérisé en ce que**
il contient un pigment métallique coloré selon l'une quelconque des revendications 1 à 8.
